# EUROPEAN PATENT SPECIFICATION

(11) **EP 3 529 298 B1**
(45) Date of publication and mention of the grant of the patent: **16.09.2020**
(21) Application number: 17791015.5
(22) Date of filing: 18.10.2017
(51) Int. Cl.: C08G 69/26, C08G 69/28, C08J 3/20, C08K 7/14

(54) **SEMI-CRYSTALLINE SEMI-AROMATIC POLYAMIDE AND COMPOSITIONS COMPRISING THE SAME**
HALBKRISTALLINES HALBAROMATISCHES POLYAMID UND ZUSAMMENSETZUNGEN DAMIT
POLYAMIDE SEMI-AROMATIQUE SEMI-CRISTALLIN ET COMPOSITIONS LE COMPRENANT

(30) Priority: 19.10.2016 EP 16194580
(43) Date of publication of application: 28.08.2019
(73) Proprietor: DSM IP Assets B.V., 6411 TE Heerlen (NL)
(72) Inventor: WOLFFS, Martin, 6100 AA Echt (NL); RULKENS, Rudy, 6100 AA Echt (NL); KIERKELS, Renier Henricus Maria, 6100 AA Echt (NL)
(74) Representative: DSM Intellectual Property
(86) International application number: PCT/EP2017/076579
(87) International publication number: WO 2018/073290

(56) References cited:
- EP-A1- 2 749 603
- US-A1- 2016 137 782

## Description

The present invention relates to a semi-crystalline semi-aromatic polyamide, and to compositions comprising the same.

Semi-crystalline semi-aromatic polyamides are widely known and applied in various compositions for use in electrical, electronic and automotive applications. In many of these applications semi-crystalline semi-aromatic polyamides are preferred over their aliphatic counterparts for their better performance under more demanding conditions involving high temperature processing, such as in surface mount technologies (SMT), high continuous use temperatures, such as in automotive under the hood applications, and better performance under humid conditions. In particular, retention of mechanical properties and good dimensional stability are important properties. Even better performance under humid conditions are obtained with special amorphous semi-aromatic polyamides. However, these polyamides lack the required high temperature mechanical properties. Moreover, with these amorphous semi-aromatic polyamides it appears more difficult to obtain a good balance between flow properties and mechanical performance, such as high temperature stiffness and creep, impact and fatigue properties. For achieving good mechanical properties generally a high load of reinforcing agents is needed, which in turn has a draw back on the flow properties. Furthermore, there is a systematic trend towards miniaturization of parts, requiring improved flow while increasing demands are put on mechanical performance at high temperature and under humid conditions.

Therefore, there is need for polyamides, and for compositions comprising the same, which have a good flow, good mechanical properties and good dimensional stability and exhibit an improved balance in performance under different conditions.

The aim of the present invention is to provide such a polyamide having an improved balance in performance, and for compositions comprising the same.

This aim has been achieved with the semi-crystalline semi-aromatic polyamide according to the invention, and to compositions comprising the same.

According to the first embodiment of the invention, the polyamide is a semi-crystalline semi-aromatic polyamide consisting of 95 - 100 mole%, preferably 98 - 100 mole%, of monomeric units derived from diamine and dicarboxylic acid, and 0 - 5 mole%, preferably 0 - 2 mole%, of one or more other monomeric units, the mole% being relative to the total mole % of monomeric units, wherein
a) diamine comprises at least 90 mole% of aliphatic diamine comprising 5 - 40 mole%, relative to the total molar amount of diamine, of a cycloaliphatic diamine chosen from the group consisting of 1,4-diaminocyclohexane, 4,4'-methylene-bis(cyclohexylamine) (PAC), 4,4'-methylene-bis(2-methylcyclohexylamine) (MAC); 3,3',5,5'-tetramethyl-4,4'-di(aminocyclohexyl)methane; 2,2',3,3'-tetramethyl-4,4'-di(aminocyclohexyl)methane; norbornanediamine; and isophoronediamine (IPD), and any mixtures thereof; and
b) the dicarboxylic acid comprises at least 95 mole% of an aromatic dicarboxylic acid comprising 50 - 100 mole%, relative to the total molar amount of dicarboxylic acid, of naphthalene dicarboxylic acid (N), or biphenyl dicarboxylic acid (B), or a combination thereof.

According to the second embodiment of the invention, the composition is a thermoplastic polymer composition, comprising
(A) a semi-crystalline semi-aromatic polyamide as mentioned here above; and
(B) a reinforcing agent; and optionally
(C) one or more further ingredient.

The effect of the semi-crystalline semi-aromatic polyamide according to the invention is that the composition comprising the polyamide has a good processability and good mechanical properties, as well as a good dimensional stability and improved retention of mechanical properties under humid conditions at elevated temperature.

The polyamide according to the invention comprises 5 - 40 mole%, relative to the total molar amount of diamine, of a cycloaliphatic diamine as specified above. With the amount in the range of 5 - 40 mole% the balance of properties of the polyamide and compositions thereof is better than for those with the amount below 5 mole% or above 40 mole%.

Herein, the amount of the cycloaliphatic diamine is preferably in the range of 10 - 35 mole%, more preferably 15 - 32 mole%.

The cycloaliphatic diamine is chosen from the group consisting of 1,4-diaminocyclohexane, 4,4'-methylene-bis(cyclohexylamine) (abbreviated herein as PAC), 4,4'-methylene-bis(2-methylcyclohexylamine) (which is equivalent to 3,3'-dimethyl-4,4'-di(aminocyclohexyl)methane; abbreviated herein as MAC); 3,3',5,5'-tetramethyl-4,4'-di(aminocyclohexyl)methane; 2,2',3,3'-tetramethyl-4,4'-di(aminocyclohexyl)methane; norbornanediamine; and isophoronediamine (which is equivalent to 3-aminomethyl-3,5,5-trimethylcyclohexylamine; abbreviated herein as IPD), and any mixtures thereof.

Preferably, the cycloaliphatic diamine comprises PAC, MAC or IPD, or any mixture thereof. More preferably, the cycloaliphatic diamine comprises, or even better fully consists of PAC or MAC, or any mixture thereof

The diamine comprises at least 90 mole% of aliphatic diamine. Preferably, the diamine comprises, next to the said cycloaliphatic diamine, a linear aliphatic α-ω diamine in an amount in the range of 60 - 95 mole%, relative to the total molar amount of diamine. More preferably, the linear aliphatic α-ω diamine comprises a C2 - C20 diamine, or any mixtures thereof, still more preferably a C4 - C18 diamine, or any mixtures thereof.

With a linear aliphatic α-ω diamine is herein understood a diamine comprising two amine groups (-NH2), wherein both NH2 groups sit at the ends of a linear aliphatic chain, i.e. wherein one -NH2 group sits at the α-position and the other at the ω-position. Examples of such diamines are: 1,2-diaminoethane (synonym: 1,2-ethylene diamine; 2 carbons); 1,3-diaminopropane (synonym: propane-1,3-diamine or 1,3-propylene diamine; 3 carbons); butane-1,4-diamine (synonym for 1,4-butane diamine; 4 carbons); pentane-1,5-diamine (synonym for 1,5-pentane diamine; 5 carbons); hexamethylenediamine (synonym: hexane-1,6-diamine or 1,6-hexane diamine; 6 carbons), heptamethylene diamine (synonym: heptane-1,7-diamine or 1,7-heptane diamine) and octamethylene diamine (synonym: octane-1.8-diamine or 1,8-octane diamine), 1,9-nonane diamine, 1,10-decane diamine, 1,11-undecane diamine, and 1,12-dodecane diamine and 1,18-octadecane diamine.

Furthermore, the diamine may optionally comprise one or more other diamine. The other diamine may be, for example, a branched aliphatic diamine, a cyclic aliphatic diamine not being a cycloaliphatic diamine as mentioned above, or an aralkyl diamine, or any combination thereof. An example of a branched diamine is 2-methyl, 1,5-pentane diamine. Examples of a such a cyclic diamine are 1,3-cyclohexanediamine and 1,4-cyclohexanediamine. Example of aralkyl diamines are metaxylylene diamine (MXD) and paraxylylene diamine (PXD).

The polyamide according to the invention may comprise, if at all, one or more other diamine, not being a cycloaliphatic diamine chosen from the group mentioned above or a linear aliphatic α-ω diamine, preferably in an amount of 0 - 10 mole%, more preferably 0 - 5 mole%, relative to the total molar amount of diamine.

The dicarboxylic acid in the semi-crystalline semi-aromatic polyamide according to the first embodiment comprises at least 95 mole% of an aromatic dicarboxylic acid comprising naphthalene dicarboxylic acid (abbreviated herein also as N), or biphenyl dicarboxylic acid (abbreviated herein also as B), or a combination thereof, in an amount in the range of 50 - 100 mole%, relative to the total molar amount of dicarboxylic acid. Preferably, the amount is in the range of 60 - 100 mole%, more preferably, of 75 - 100 mole%, relative to the total molar amount of dicarboxylic acid.

Suitably, the naphthalene dicarboxylic acid (N) comprises one of 2,6-naphthalene dicarboxylic acid, 1,4-naphthalenedicarboxylic acid, 1,5-naphthalene dicarboxylic acid, 2,7-naphthalene dicarboxylic acid, or a combination thereof, and preferably comprises, or even consists of 2,6-naphthalene dicarboxylic acid.

Suitably, the biphenyl dicarboxylic acid (B) comprises one of 3,3'-biphenyl dicarboxylic acid, 3,4'-biphenyl dicarboxylic acid and 4,4'-biphenyl dicarboxylic acid, and preferably comprises, or even consists of 4,4'-biphenyl dicarboxylic acid.

The dicarboxylic acid suitably comprises another aromatic dicarboxylic acid, if any, in an amount in the range of 0 - 50 mole%, preferably 0 - 40 mole%, and more preferably 0 - 25 mole%, relative to the total molar amount of dicarboxylic acid, of another dicarboxylic acid, different from naphthalene dicarboxylic acid (N) and biphenyl dicarboxylic acid (B). Suitably, the other aromatic dicarboxylic acid comprises terephthalic acid (T) or isophthalic acid (I), or a mixture thereof, and preferably comprises or even better consists of terephthalic acid.

The polyamide may optionally comprise an aliphatic dicarboxylic acid. The amount thereof is limited to a range of 0 - 5 mole%, preferably 0 - 2 mole%, relative to the total molar amount of dicarboxylic acid.

The polyamide comprises monomeric units derived from diamines and dicarboxylic acid. The polyamide may further comprise other monomeric units, for example monomeric units derived from one or more monomers comprising one functional group, or three- functional groups, or more than three functional groups, or a mixture thereof. Herein the functional group suitably is an amine group or a carboxylic acid. Mono-functional monomers can be used as chain stoppers. Tri-functional monomers and higher can be used as branching agent. Other monomeric units may also be derived from difunctional monomers such as aminoacids, or lactams, or a mixture thereof.

In a preferred embodiment of the invention, the polyamide is a semi-crystalline semi-aromatic polyamide, wherein
a. the diamine consists of
   i. 5 - 40 mole% of a cycloaliphatic diamine chosen from the group consisting of 1,4-diaminocyclohexane, 4,4'-methylene-bis(cyclohexylamine) (PAC), 3,3'-dimethyl-4,4'-di(aminocyclohexyl)methane (MAC); 3,3',5,5'-tetramethyl-4,4'-di(aminocyclohexyl)methane; 2,2',3,3'-tetramethyl-4,4'-di(aminocyclohexyl)methane; norbornanediamine; and isophoronediamine (IPD), and any mixtures thereof; wherein the cycloaliphatic diamine comprises 10 - 40 mole% of PAC, MAC and IPD, or a combination thereof, and
   ii. 60 - 90 mole% of a linear aliphatic α-ω diamine, and optionally
   iii. 0 - 10 mole% of another diamine;
   wherein the mole % is relative to the total molar amount of diamine
b. the dicarboxylic acid consists of
   i. 50 - 100 mole% of naphthalene dicarboxylic acid and /or biphenyl dicarboxylic acid; and optionally
   ii. 0 - 50 mole% of another aromatic dicarboxylic acid, and/or
   iii. 0 - 5 mole% of an aliphatic dicarboxylic acid,
   wherein the mole % is relative to the total molar amount of dicarboxylic acid.

In a more preferred embodiment, the polyamide is a semi-crystalline semi-aromatic polyamide, wherein
a. the diamine consists of
   i. 10 - 40 mole% of a cycloaliphatic diamine chosen from PAC, MAC and IPD, or a combination thereof, and
   ii. 60 - 90 mole% of a linear aliphatic α-ω diamine, and optionally
   iii. 0 - 10 mole% of another diamine, not being a linear aliphatic α-ω diamine or a cycloaliphatic diamine chosen from PAC, MAC and IPD;
   wherein the mole % is relative to the total molar amount of diamine; and
b. the dicarboxylic acid consists of
   i. 75 - 100 mole%, relative to the total molar amount of dicarboxylic acid, of naphthalene dicarboxylic acid and /or biphenyl dicarboxylic acid, and optionally
   ii. 0 - 25 mole%, relative to the total molar amount of dicarboxylic acid, of another aromatic dicarboxylic acid, and/or
   iii. 0 - 5 mole%, relative to the total molar amount of dicarboxylic acid, of an aliphatic dicarboxylic acid,
   wherein the mole % is relative to the total molar amount of dicarboxylic acid.

Semi-crystalline polymers typically have a morphology comprising crystalline domains, characterized by a melting temperature and a melting enthalpy, and amorphous domains characterized by a glass transition temperature.

With the term semi-crystalline in semi-crystalline polyamide is herein understood that the polyamide has a melting temperature (Tm) and a melting enthalpy (ΔHm), as well as a glass transition temperature (Tg).

Suitably, the melting temperature (Tm) of the semi-crystalline semi-aromatic polyamides according to the invention, and the various preferred and particular embodiments thereof, suitably is at least 250 °C, or better at least 270 °C. Preferably, Tm is in the range of 280 - 350 °C, more preferably 290 - 330 °C.

With the term melting temperature is herein understood the temperature, measured by the differential scanning calorimetry (DSC) method according to ISO-11357-1/3, 2011, on pre-dried samples, in a N2 atmosphere with heating and cooling rate of 20°C/min. Herein Tm has been calculated from the peak value of the highest melting peak in the second heating cycle.

Suitably the semi-crystalline polyamides according to the invention, and the various preferred and particular embodiments thereof, have a melting enthalpy of at least 10 J/g, preferably at least 20 J/g, and even more preferably at least 25 J/g.

With the term melting enthalpy (ΔHm) is herein understood the melting enthalpy, measured by the DSC method according to ISO-11357-1/3, 2011, on pre-dried samples in a N2 atmosphere with heating and cooling rate of 20°C/min. Herein (ΔHm) has been calculated from the surface under the melting peak in the second heating cycle.

Suitably the semi-crystalline polyamides according to the invention, and the various preferred and particular embodiments thereof, have a glass transition temperature of at least 135 °C, preferably at least 145 °C, more preferably at least 150 °C.

With the term glass transition temperature (Tg) is herein understood the temperature, measured by the DSC method according to ISO-11357-1/2, 2011, on pre-dried samples in a N2 atmosphere with heating and cooling rate of 20 °C/min. Herein Tg has been calculated from the value at the peak of the first derivative (with respect of time) of the parent thermal curve corresponding with the inflection point in the second heating cycle of the parent thermal curve.

In a preferred embodiment of the invention, the semi-crystalline semi-aromatic polyamide has a Tm of at least 250 °C, a ΔHm of at least 20 J/g, and a Tg of at least 135 °C. More preferably, the semi-crystalline semi-aromatic polyamide has a Tm of at least 270 °C, a ΔHm of at least 25 J/g, and a Tg of at least 145 °C.

The present invention also relates to a thermoplastic polymer composition. Herein the composition comprises:
(A) a semi-crystalline semi-aromatic polyamide according to invention as described above;
(B) a reinforcing agent; and optionally
(C) one or more further ingredient.

Suitably, the composition comprises
(A) 30 - 70 wt.% of the semi-crystalline semi-aromatic polyamide;
(B) 5 - 60 wt.% of an inorganic filler or a fibrous reinforcing agent, or a combination thereof;
(C) 0 - 40 wt.% of one or more further ingredient.

The effect of the composition according to the invention is the combined effect between the semi-crystalline semi-aromatic polyamide and the reinforcing agent. The reinforcing agent contributes to the mechanical properties of the composition, in particular contributing to the tensile strength and tensile modulus, while the semi-crystalline semi-aromatic polyamide according to the invention contributes to the retention of the mechanical properties under humid conditions at elevated temperatures.

Suitably, the semi-crystalline semi-aromatic polyamide therein is one according to the first embodiment of the present invention, or any preferred or particular embodiment thereof.

The reinforcing agent in the composition according to the invention suitable comprises, at least one component selected from reinforcing fibers and inorganic fillers, or a combination thereof. Herein a wide range of fibers and fillers may be used. Examples of such fillers include, but are not limited to, silica, metasilicates, alumina, talc, diatomaceous earth, clay, kaolin, quartz, glass, mica, titanium dioxide, molybdenum disulphide, gypsum, iron oxide, zinc oxide, powdered polytetrafluoroethylene, montmorillonite, calcium carbonate, glass powder and glass beads.

As reinforcing fibers, for example aromatic fibers as well as inorganic fibers may be used. Preferably, inorganic fibers are used. Examples thereof are glass fibers, carbon fibers, boron fibers, ceramic fibers and whiskers of wollastonite and potassium titanate.

In a preferred embodiment of the invention, the reinforcing agent in the polymer composition comprises, or even consists of inorganic fibers or inorganic fillers, or a combination thereof.

Preferably, the reinforcing agent (component (B)) comprises glass fibers or carbon fibers. More preferably glass fibers are used. These glass fibers may be of various composition and shape, for example, S-glass, E-glass and basalt glass, as well as round glass and flat glass fibers.

The polymer composition may comprise one or more other components (component (C)), different from the semi-crystalline semi-aromatic polyamide (component (A)), and the reinforcing agent (component (B)). As component (C), any auxiliary additive used in polyamide molding compositions may be used.

It is noted that the terms "one or more" and "at least one" are herein meant to have the same meaning and can be used interchangeably. When the amount of a component can be 0 wt.%, for example, when the component is present in an amount in a range starting from 0 wt.%, the amount of 0 wt.% it is to be understood that no such component is present at all.

Suitable additives include stabilizers, flame retardants, plasticizers, conductive and/or anti-static agents, lubricants and mold release agents, nucleating agents, dyes and pigments, and any other auxiliary additives that may be used in polyamide compositions. Examples of heat stabilizers include copper (I) halides e.g. copper bromide and copper iodide, and alkali halides e.g. lithium, sodium and potassium bromides and iodides.

The invention is further illustrated with the following Examples and Comparative Experiments.

### Polymer preparation

### Examples 1-5 and Comparative Experiments A-D.

Diacids and diamines were weighed in the appropriate amounts and molar ratio's according to their desired composition, and put into a glass vial. It was ensured that an equimolar balance between diamine and diacid was added to the glass vial. Subsequently the glass vial was placed in a metal container in an autoclave and the atmosphere was made inert by passing over nitrogen. The metal container was closed and placed in a heater that was preheated to 290 °C and kept there for 2 hours. Subsequently the container was cooled to room temperature and the resulting polymer was removed from the glass vial.

### Compounding

Glass fiber reinforced compositions, 70 wt.% polyamide, 30 wt.% glass fiber, were prepared on a twin-screw extruder employing standard compounding conditions for glass fiber reinforced thermoplastic polyamide compositions

The polymer compositions and physical properties of the polymers and mechanical properties of the polymers and compositions are listed in Table 1. Herein the dynamic modulus at 115 115 °C of test bars made of the polymers and compositions before and after conditioning at 100% RH are tested and compared. The trends in the mechanical performance of the polymers and the compositions are comparable. The polymers and compositions according to the invention (E-1-5) retain their properties better than the other materials (CE-A-D).

**Table 1. Polymer compositions, physical properties of the polymers and mechanical properties of the compositions for Examples 1-5 and Comparative Experiments A-D.**

| Examples /Comparative Experiments | Polyamide (mole %) | Tm (°C) | ΔH (J/g) | Tg (°C) | E' (115 °C), dry | E' (115 °C), 100% RH conditioned |
|---|---|---|---|---|---|---|
| E-1 | 6N/MACN (70/30) | 348 | 26 | 191 | + | + |
| E-2 | 6N/MACN (80/20) | 346 | 52 | 175 | + | + |
| E-3 | 10N/MACN (70/30) | 293 | 26 | 152 | + | + |
| E-4 | 12N/MACN (80/20) | 285 | 24 | 146 | + | + |
| E-5 | 18BB/MACBB (70/30) | 283 | 25 | 150 | + | + |
| CE-A | 10N | 325 | 82 | 139 | + | - |
| CE-B | 12N | 295 | 88 | 120 | + | - |
| CE-C | 6T/MACT (70/30) | 317 | 51 | 175 | + | +/- |
| CE-D | 6T/MACT (75/25 ) | 320 | 43 | 168 | + | +/- |

## Claims

1. Semi-crystalline semi-aromatic polyamide consisting of 95 - 100 mole% of monomeric units derived from diamine and dicarboxylic acid, and 0 - 5 mole% of one or more other monomeric units, the mole% being relative to the total mole % of monomeric units, wherein
a) the diamine comprises at least 90 mole% of aliphatic diamine comprising 5 - 40 mole%, relative to the total molar amount of diamine, of a cycloaliphatic diamine chosen from the group consisting of 1,4-diaminocyclohexane, 4,4'-methylene-bis(cyclohexylamine) (PAC), 3,3'-dimethyl-4,4'-di(aminocyclohexyl)methane (MAC); 3,3',5,5'-tetramethyl-4,4'-di(aminocyclohexyl)methane; 2,2',3,3'-tetramethyl-4,4'-di(aminocyclohexyl)methane; norbornanediamine; and isophoronediamine (IPD), and any mixtures thereof;
b) the dicarboxylic acid comprises at least 95 mole% of an aromatic dicarboxylic acid comprising 50 - 100 mole%, relative to the total molar amount of dicarboxylic acid, of naphthalene dicarboxylic acid (N), or biphenyl dicarboxylic acid (B), or a combination thereof.

2. Polyamide according to claim 1, wherein the cycloaliphatic diamine comprises PAC, MAC or IPD, or any combination thereof.

3. Polyamide according to 1 or 2, wherein the diamine comprises 60 - 95 mole%, relative to the total molar amount of diamine, of a linear aliphatic α-ω diamine.

4. Polyamide according to claim 3, wherein the linear aliphatic α-ω diamine comprises a C2 - C20 diamine.

5. Polyamide according to any of claims 1 - 4, wherein the diamine comprises 0 - 10 mole%, relative to the total molar amount of diamine, of another diamine, not being a linear aliphatic α-ω diamine or a cycloaliphatic diamine chosen from the group of claim 1.

6. Polyamide according to any of claims 1 - 5, wherein the dicarboxylic acid comprises 0 - 40 mole%, relative to the total molar amount of dicarboxylic acid, of another aromatic dicarboxylic acid.

7. Polyamide according to claim 6, wherein the other aromatic dicarboxylic acid comprises terephthalic acid or isophthalic acid, or a mixture thereof, and preferably comprises terephthalic acid.

8. Polyamide according to any of claims 1 - 7, wherein the dicarboxylic acid comprises 0 - 5 mole%, preferably 0 - 2 mole%, relative to the total molar amount of dicarboxylic acid, of an aliphatic dicarboxylic acid.

9. Polyamide according to any of claims 1 - 8, wherein the polyamide has a Tm of at least 250 °C, a ΔHm of at least 20 J/g, and a Tg of at least 135 °C, determined according to the methods identified in the specification.

10. Thermoplastic polymer composition, comprising
(A) a semi-crystalline semi-aromatic polyamide according to any of claims 1-9; and
(B) a reinforcing agent; and optionally
(C) one or more further ingredient.

11. Composition according to claim 10, wherein the composition comprises
(A) 30 - 70 wt.% of the semi-crystalline semi-aromatic polyamide;
(B) 5 - 60 wt.% of an inorganic filler or a fibrous reinforcing agent, or a combination thereof;
(C) 0 - 40 wt.% of one or more further ingredient.

## Patentansprüche

1. Teilkristallines teilaromatisches Polyamid, bestehend aus 95-100 Mol-% Monomereinheiten, die sich von Diamin und Dicarbonsäure ableiten, und 0-5 Mol-% einer oder mehrerer anderer Monomereinheiten, wobei sich die Mol-% auf die gesamten Mol-% von Monomereinheiten beziehen, wobei
a) das Diamin mindestens 90 Mol-% aliphatisches Diamin, umfassend 5-40 Mol-%, bezogen auf die gesamte molare Menge an Diamin, eines cycloaliphatischen Diamins aus der Gruppe bestehend aus 1,4-Diaminocyclohexan, 4,4'-Methylenbis-(cyclohexylamin) (PAC), 3,3'-Dimethyl-4,4'-di-(aminocyclohexyl)methan (MAC), 3,3',5,5'-Tetramethyl-4,4'-di(aminocyclohexyl)methan, 2,2',3,3'-Tetramethyl-4,4'-di-(aminocyclohexyl)methan, Norbornandiamin und Isophorondiamin (IPD) und Mischungen davon, umfasst;
b) die Dicarbonsäure mindestens 95 Mol-% einer aromatischen Dicarbonsäure, umfassend 50-100 Mol-%, bezogen auf die gesamte molare Menge an Dicarbonsäure, Naphthalindicarbonsäure (N) oder Biphenyldicarbonsäure (B) oder einer Kombination davon, umfasst.

2. Polyamid nach Anspruch 1, wobei das cycloaliphatische Diamin PAC, MAC oder IPD oder eine beliebige Kombination davon umfasst.

3. Polyamid nach Anspruch 1 oder 2, wobei das Diamin 60-95 Mol-%, bezogen auf die gesamte molare Menge an Diamin, eines linearen aliphatischen α,ω-Diamins umfasst.

4. Polyamid nach Anspruch 3, wobei das lineare aliphatische α,ω-Diamin ein C2-20-Diamin umfasst.

5. Polyamid nach einem der Ansprüche 1-4, wobei das Diamin 0-10 Mol-%, bezogen auf die gesamte molare Menge an Diamin, eines anderen Diamins, bei dem es sich nicht um ein lineares aliphatisches α,ω-Diamin oder ein cycloaliphatisches Diamin aus der Gruppe gemäß Anspruch 1 handelt, umfasst.

6. Polyamid nach einem der Ansprüche 1-5, wobei die Dicarbonsäure 0-40 Mol-%, bezogen auf die gesamte molare Menge an Dicarbonsäure, einer anderen aromatischen Dicarbonsäure umfasst.

7. Polyamid nach Anspruch 6, wobei die andere aromatische Dicarbonsäure Terephthalsäure oder Isophthalsäure oder eine Mischung davon umfasst und vorzugsweise Terephthalsäure umfasst.

8. Polyamid nach einem der Ansprüche 1-7, wobei die Dicarbonsäure 0-5 Mol-%, vorzugsweise 0-2 Mol-%, bezogen auf die gesamte molare Menge an Dicarbonsäure, einer aliphatischen Dicarbonsäure umfasst.

9. Polyamid nach einem der Ansprüche 1-8, wobei das Polyamid eine Tm von mindestens 250 °C, eine ΔHm von mindestens 20 J/g und eine Tg von mindestens 135 °C, bestimmt gemäß den in der Beschreibung angegebenen Methoden, aufweist.

10. Thermoplastische Polymerzusammensetzung, umfassend
(A) ein teilkristallines teilaromatisches Polyamid nach einem der Ansprüche 1-9 und
(B) ein Verstärkungsmittel und gegebenenfalls
(C) ein oder mehrere weitere Bestandteile.

11. Zusammensetzung nach Anspruch 10, wobei die Zusammensetzung
(A) 30-70 Gew.-% des teilkristallinen teilaromatischen Polyamids;
(B) 5-60 Gew.-% eines anorganischen Füllstoffs oder eines faserförmigen Verstärkungsmittels oder einer Kombination davon;
(C) 0-40 Gew.-% eines oder mehrerer weiterer Bestandteile
umfasst.

## Revendications

1. Polyamide semi-aromatique semi-cristallin constitué de 95 à 100 %mol d'unités monomères dérivées d'une diamine et de l'acide dicarboxylique, et de 0 à 5 %mol d'une ou plusieurs autres unités monomères, le pourcentage molaire étant exprimé relativement au pourcentage molaire total des unités monomères, dans lequel
a) la diamine comprend au moins 90 %mol d'une diamine aliphatique comprenant 5 à 40 %mol, relativement à la quantité molaire totale de diamine, d'une diamine cycloaliphatique choisie dans le groupe constitué du 1,4-diaminocyclohexane, de la 4,4'-méthylène-bis(cyclohexylamine) (PAC), du 3,3'-diméthyl-4,4'-di(aminocyclohexyl)méthane (MAC), du 3,3',5,5'-tétraméthyl-4,4'-di(aminocyclohexyl)méthane, du 2,2',3,3'-tétraméthyl-4,4'-di(aminocyclohexyl)méthane, de la norbornanediamine, de l'isophoronediamine (IPD), et de n'importe quels mélanges de ceux-ci ;
b) l'acide dicarboxylique comprend au moins 95 %mol d'un acide dicarboxylique aromatique comprenant 50 à 100 %mol, relativement à la quantité molaire totale d'acide dicarboxylique, d'acide naphtalènedicarboxylique (N), ou d'acide biphényldicarboxylique (B), ou d'une combinaison de ceux-ci.

2. Polyamide selon la revendication 1, dans lequel la diamine cycloaliphatique comprend de la PAC, du MAC ou de l'IPD, ou n'importe quelle combinaison de ceux-ci.

3. Polyamide selon la revendication 1 ou 2, dans lequel la diamine comprend 60 à 95 %mol, relativement à la quantité molaire totale de diamine, d'une α-ω-diamine aliphatique linéaire.

4. Polyamide selon la revendication 3, dans lequel l'α-ω-diamine aliphatique linéaire comprend une diamine C₂-C₂₀.

5. Polyamide selon l'une quelconque des revendications 1 à 4, dans lequel la diamine comprend 0 à 10 %mol, relativement à la quantité molaire totale de diamine, d'une autre diamine, qui n'est pas une α-ω-diamine aliphatique linéaire ou une diamine cycloaliphatique choisie dans le groupe selon la revendication 1.

6. Polyamide selon l'une quelconque des revendications 1 à 5, dans lequel l'acide dicarboxylique comprend 0 à 40 %mol, relativement à la quantité molaire totale d'acide dicarboxylique, d'un autre acide dicarboxylique aromatique.

7. Polyamide selon la revendication 6, dans lequel l'autre acide dicarboxylique aromatique comprend l'acide téréphtalique ou l'acide isophtalique, ou un mélange de ceux-ci, et comprend préférablement l'acide téréphtalique.

8. Polyamide selon l'une quelconque des revendications 1 à 7, dans lequel l'acide dicarboxylique comprend 0 à 5 %mol, préférablement 0 à 2 %mol, relativement à la quantité molaire totale d'acide dicarboxylique, d'un acide dicarboxylique aliphatique.

9. Polyamide selon l'une quelconque des revendications 1 à 8, le polyamide ayant une valeur Tm d'au moins 250 °C, une valeur ΔHm d'au moins 20 J/g, et une valeur Tg d'au moins 135 °C, déterminées par les méthodes identifiées dans le descriptif.

10. Composition de polymère thermoplastique, comprenant :
(A) un polyamide semi-aromatique semi-cristallin selon l'une quelconque des revendications 1 à 9 ; et
(B) un agent de renforcement ; et optionnellement
(C) un ou plusieurs autres ingrédients.

11. Composition selon la revendication 10, la composition comprenant :
(A) 30 à 70 % en poids du polyamide semi-aromatique semi-cristallin ;
(B) 5 à 60 % en poids d'une charge inorganique ou d'un agent de renforcement fibreux, ou d'une combinaison de ceux-ci ;
(C) 0 à 40 % en poids d'un ou plusieurs autres ingrédients.
